(19)

Europäisches
Patentamt
European
Patent Office
Office européen
des brevets

(11) **EP 4 498 123 A1**

(12) **EUROPEAN PATENT APPLICATION**

(43) Date of publication:
**29.01.2025 Bulletin 2025/05**

(21) Application number: **23188394.3**

(22) Date of filing: **28.07.2023**

(51) International Patent Classification (IPC):
**G01S 13/00** (2006.01)    **G01S 13/58** (2006.01)
**G01S 13/76** (2006.01)    **G01S 13/87** (2006.01)

(52) Cooperative Patent Classification (CPC):
**G01S 13/003**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventors:
• **Gherekhloo, Soheil
74348 Lauffen Am Neckar (DE)**
• **Kariminezhad, Ali
31141 Hildesheim (DE)**

(54) **WIRELESS COMMUNICATION AND SENSING**

(57)     According to a first aspect, there is provided a radio device (R1) configured for wireless communication and bistatic or multi-static radar sensing, comprising a transceiver, a memory, and processor coupled to the transceiver and the memory. The transceiver and the processor are configured to obtain, from a second radio device (R2) via the transceiver, a baseband receive signal comprising an encoded message and a plurality of reference signals after transmission through a wireless channel (102). The transceiver and the processor are configured to compute channel state information using the plurality of reference signals comprised in the baseband receive signal. The transceiver and the processor are configured to compute an estimate of a transmitted signal originally transmitted by the second radio device using the channel state information and the receive signal. The transceiver and the processor are configured to perform at least demodulation and channel decoding on the estimate of the transmitted signal, to thus obtain an estimate of the message transmitted by the second radio device. The transceiver and the processor are configured to generate a reconstruction of the transmitted signal by performing baseband signal processing and reference signal insertion on the estimated message, wherein the baseband signal processing and reference signal insertion corresponds to the baseband signal processing and reference signal insertion performed by the second radio device. The transceiver and the processor are configured to generate sensing channel data by combining the reconstruction of the transmitted signal and the receive signal.

Fig. 1

EP 4 498 123 A1

## Description

Technical Field

The present application relates to radio devices configured for wireless communication and bistatic or multi-static radar sensing, an associated method, system, and a computer program product.

Background

Bistatic channel sensing refers to a method of sensing the channel matrix from a remote location at a first radio device when a second radio device transmits a signal. The first radio device can detect a line of sight signal, and a plurality of reflections caused by scatterer present in the physical radio environment, for example. Multistatic channel sensing extends this approach by providing a plurality of radio devices to sense when a second radio device has transmitted a signal. By means of signal processing, the channel matrix defining the physical radio environment can be reconstructed. The channel matrix can be processed to enable, for example, at least the first radio device to localise one or more scatterers, objects, or other radio devices in the physical environment. The first radio device may, for example, derive the location, speed, acceleration, space envelope, and other attributes using the bistatically or multistatically composed channel matrix. Integrated communication and sensing advances on bistatic and multistatic channel sensing by utilising communication waveforms of common wireless communication standards intended for data transfer to construct the channel matrix used for bistatic or multistatic channel sensing. This enables the coexistence of data communication and physical channel sensing. However, such techniques may be further improved.

Summary

According to a first aspect, there is provided a first radio device configured for wireless communication and bistatic or multi-static radar sensing, comprising a transceiver, a memory, and processor coupled to the transceiver and the memory. The transceiver and the processor are configured to obtain, from a second radio device via the transceiver, a baseband receive signal comprising an encoded message and a plurality of reference signals after transmission through a wireless channel. The transceiver and the processor are configured to compute channel state information using the plurality of reference signals comprised in the baseband receive signal. The transceiver and the processor are configured to compute an estimate of a transmitted signal originally transmitted by the second radio device using the channel state information and the receive signal. The transceiver and the processor are configured to perform at least demodulation and channel decoding on the estimate of the transmitted signal, to thus obtain an estimate of the message transmitted by the second radio device. The transceiver and the processor are configured to generate a reconstruction of the transmitted signal by performing baseband signal processing and reference signal insertion on the estimated message, wherein the baseband signal processing and reference signal insertion corresponds to the baseband signal processing and reference signal insertion performed by the second radio device. The transceiver and the processor are configured to generate sensing channel data by combining the reconstruction of the transmitted signal and the receive signal.

An effect is that reference signals (sometimes referred to as pilot symbols) can be used to facilitate the channel sensing in an integrated radio communication and sensing scheme. Accordingly, the sensing in the integrated radio communication and sensing scheme can be performed without a priori knowledge of the transmitted data. In some embodiments, the payload used for channel estimation can be reduced (the portion of channel resource used for reference signals). In some cases, a radio device that is not the intended receiver of a communicated message can still use the signal carrying the communicated message to perform channel sensing, by decoding the message intended for the intended receiver of the message and then performing signal processing implementing channel sensing. In some cases, a radio device that is not the intended receiver of a communicated message may not be able to decode (for the purposes of channel sensing) the message for the intended receiver. In this case, the radio device that is not the intended receiver of the communicated message can signal to an original radio device responsible for transmitting the message to the intended receiver requesting a retransmission. According to embodiments, sensing becomes feasible from communication signals that are already established between radio devices. Therefore, no modification of the transmitter is needed to enable sensing to take place. Integrated sensing at a bistatic or multistatic radio device can be implemented using widely available communication signals. Furthermore, a bistatic or multistatic radio device may be able to estimate the channel state more accurately according to techniques described herein. In this case, the density or structure of the reference signals (pilot symbols) can be simplified or compressed, to enable more data to be transmitted. Accordingly, an effect of the proposed approach is generally to improve the quality of bistatic or multistatic sensing given resources that are already present in communication protocols for CSI estimation. By applying feedback from the bistatic or multistatic radio device to the transmitter, the bistatic or multistatic receiver can set the resources available for sensing (CSI estimation) with respect to the dynamic conditions of the channel or the number of objects, reflections, or scatterers in the physical channel.

According to a second aspect, there is provided a computer implemented method for wireless communication and bistatic or multi-static radar sensing comprising:

obtaining, from a second radio device, a baseband receive signal comprising an encoded message and a plurality of reference signals after transmission through a wireless channel;
computing an estimate of a transmitted signal originally transmitted by the second radio device using the channel state information and the receive signal;
obtaining an estimated signal using the channel state information and the receive signal;
performing at least demodulation and channel decoding on the estimate of the transmitted signal to thus obtain an estimate of the message transmitted by the second radio device;
generating a reconstruction of the transmit signal by performing baseband signal processing, and reference signal insertion, on the estimate of the message, wherein the baseband signal processing and reference signal insertion corresponds to the baseband signal processing and reference signal insertion performed by the second radio device; and
generating sensing channel data by combining the reconstruction of the transmit signal and the receive signal.

According to a third aspect, there is provided a fourth radio device configured for wireless communication and bistatic or multi-static radar sensing, comprising a transceiver, a memory, a processor coupled to the transceiver and the memory. The transceiver and the processor are configured to receive, from a first radio device via the transceiver, a negative acknowledgement indicating that use of an encoded message received by the first radio device for radar sensing at a first radio device is not possible, compute an updated reference signal scheme; and transmit a further signal to the first radio device comprising a further encoded message and a further plurality of reference signals. The further plurality of reference signals are defined according to the updated reference signal scheme.

According to a fourth aspect, there is provided a wireless communications system comprising a first radio device configured for wireless communication and bistatic or multi-static radar sensing according to the first aspect, or one of its embodiments, and a second radio device configured to transmit a signal to the first radio device, wherein the signal comprises an encoded message and a plurality of reference signals.

According to a fifth aspect, there is provided a computer program product comprising machine readable instructions which, when executed by a processor, cause the processor to perform the method according to the second aspect.

Further, there is provided a machine readable storage medium having stored thereon the computer program product according to the fifth aspect.

Brief Description of the Drawings

Exemplary embodiments are depicted in the figures, which are not to be construed as limiting the claims, and are explained in greater detail below. Where possible, like reference numerals denote analogous or like features in different figures.

Fig. 1    schematically illustrates a system of radio devices located in a physical environment.
Fig. 2    schematically illustrates a first radio device.
Fig. 3    schematically illustrates a second radio device.
Fig. 4    schematically illustrates an example of a combined communication and sensing signal chain.
Fig. 5    schematically illustrates an OFDM resource block having a first reference signal pattern.
Fig. 6    schematically illustrates an OFDM resource block having a second reference signal pattern.
Fig. 7    schematically illustrates signalling between first and second radio devices to determine a failed sensing attempt.
Fig. 8    schematically illustrates a method according to the second aspect.

Detailed Description

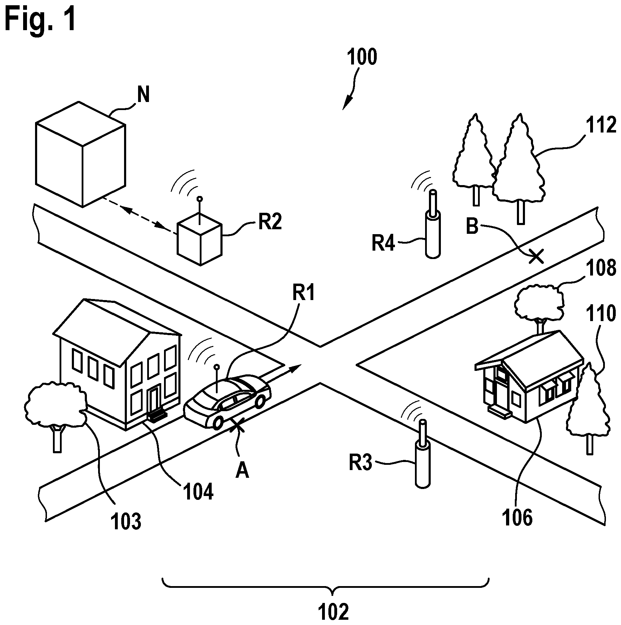

Fig. 1 schematically illustrates a system of radio devices located in a physical environment.

The physical environment 102 at a given timestep includes, for example, a simple urban scenario comprising urban dwellings 104, 106, and trees and vegetation 103, 112, 108, 110. In this scenario, a vehicle comprising a first radio device R1 at location A is travelling towards location B. A second radio device R2 is comprised in a base station, for example. The second radio device R2 is communicatively coupled to a network controller N which may, in an example, host a location tracking service, for example. A third radio device R3 and a fourth radio device R4 are also comprised in roadside units, for example designed to transmit CAM messages to vehicles in the physical environment 102.

In this context, sensing of the physical environment 102 can be provided to address a range of sensing use cases. The first radio device R1 inside the vehicle can detect spatial information about the range, position, velocity of other vehicles or obstacles on the road surrounding the vehicle comprising the first radio device R1. This information can be used by the vehicle for cruise control, parking guidance, or collision avoidance, for example. Static radio devices, for example the third radio device R3 and the fourth radio device R4 can detect spatial information about traffic density or line of sight signal blockers to other radio devices in the physical environment 102.

In the case of bistatic sensing, for example, the second radio device R2 transmits a communication signal to one of the other radio devices in the physical environment 102. The first radio device R1 performs signal processing to implement bistatic sensing on the signal transmitted from R2 in order to sense an aspect of the physical environment 102, using the signal transmitted from R2. This may be extended to a multistatic sensing case, where the third radio device R3 and the fourth radio device R4 perform signal processing to implement multistatic sensing on the signal transmitted from R2. In an example, the first radio device R1, the third radio device R3, and the fourth radio device R4 are configured to obtain from respective other radio devices multistatic sensing signals, to enable each radio device to form a fuller representation of the physical environment 102. In another example, each radio device R1, R3, R4 transmit data representing individual bistatic or multistatic sensing results to a network controller N via radio device R2. A location sensing service that is communicably coupled to the network controller N can, for example, collate the individual bistatic or multistatic sensing results from radio devices R1, R3, R4. After collation for (example, by sensor fusion), the location sensing service subsequently provides a representation of the physical environment 102 to a user application layer of software in a radio device and/or vehicle present in the physical environment 102. This beneficially enables a location sensing service to build a fuller representation of the physical environment 102 than would be possible using bistatic sensing results from only one radio device.

In general, for performing multistatic sensing, the communication signals created by the transmitter should be known at the receiver side. This specification proposes to use the reference signals transmitted by many communication standards to facilitate the bistatic or multistatic sensing.

The state of the physical environment 102 relates to parameters that affect the radio channel figure of merit between at least the first radio device R1 and the second radio device R2 in the area of the environment in which these devices are operating. The term "physical environment" may refer to a 3D function defining the presence of radio frequency blocking or reflecting materials. In an urban environment, the physical environment may be affected by the disposition of buildings in an environment, their height, shape, density, and construction materials, and their relation to a street boundary, and the general disposition of the buildings or other RF signal reflectors (for example, the presence of urban canyons). The response of an RF signal to the physical environment may be affected by the presence, and shape, of trees and shrubs, and in particular bodies of water. The physical environment may be affected by the weather, for example rainfall, the presence of layers of water on buildings, which may cause different propagation characteristics to those experienced in sunny weather. The physical environment may be defined by the general traffic density, and as such, the time of day at which a sample of the physical environment is obtained. Furthermore, the presence of individual vehicles having awkward or blocking shapes in proximity to a first and second radio device may affect the physical environment. A skilled person will appreciate that many other parameters and factors of the physical environment in the sense of affecting the radio channel figure of merit between radio devices, without loss of generality. It is not essential that the "physical environment" is defined by a 3D function. For example, a 2D image of a road intersection may permit geometrical analysis or other inference concerning whether, or not, radio communication between two radio devices will be affected by a blocker.

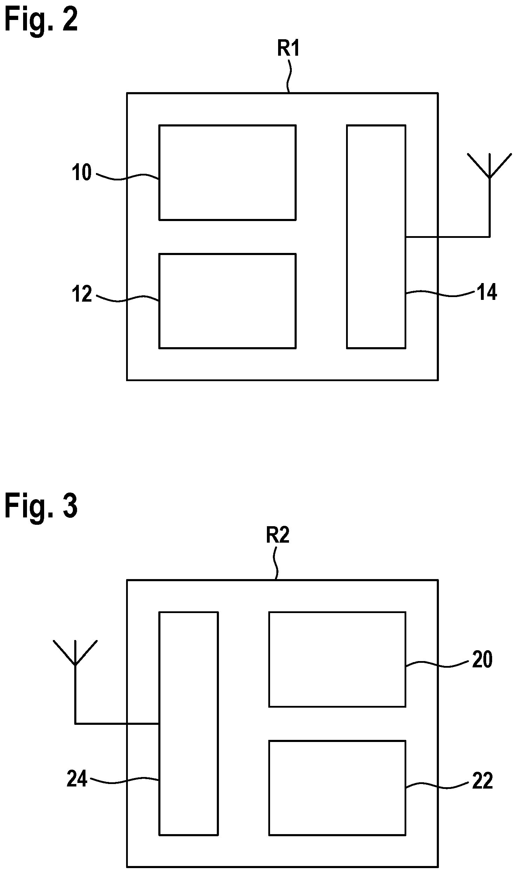

Fig. 2 schematically illustrates a first radio device R1.

Fig. 3 schematically illustrates a second radio device R2.

According to a first aspect, there is provided a first radio device R1 configured for wireless communication and bistatic or multi-static radar sensing, comprising a transceiver 14, a memory 12, and a processor 10 coupled to the transceiver 14 and the memory 12.

The transceiver and the processor are configured to obtain, from a second radio device R2 via the transceiver 14, a baseband receive signal Y comprising an encoded message X and a plurality of reference signals P after transmission through a wireless channel 102. I.e., the baseband receive Signal Y, which is transmitted through the wireless channel 102, is obtained by the transceiver and the processor. The processor is configured to compute channel state information using the plurality of reference signals comprised in the baseband receive signal. The processor is configured to compute an estimate of a transmitted signal originally transmitted by the second radio device R2 using the channel state information and the baseband receive signal. The processor is configured to perform at least demodulation and channel decoding on the estimate of the transmitted signal, to thus obtain an estimate of the message W' transmitted by the second radio device R2. The processor is configured to generate a reconstruction of the transmitted signal by performing baseband signal processing and reference signal insertion on the estimated message W'. The baseband signal processing and reference signal insertion corresponds to the baseband signal processing and reference signal insertion performed by the second radio device R2. The processor is configured to generate sensing channel data H by combining the reconstruction of the transmitted signal and the receive signal.

A skilled person will appreciate that the first radio device R1 is described in exemplary terms, and that many types of device can comprise the first radio device R1. For example, the transceiver 14 may be configured to communicate using one, or any combination, of C-V2X and NR-V2X for autonomous driving.

According to an example, the transceiver 14 is configured to communicate in a transmission mode including direct V2X, which includes V2V, V2I, and V2P in the ITS 5.9 gigahertz (GHz) spectrum. According to another example, the transceiver 14 mode includes mobile broadband systems and technologies, such as fourth generation wireless mobile communication technologies 4G such as LTE, LTE-Advanced systems, mobile Wi-MAX. According to another example, the transceiver 14 mode includes fifth generation wireless mobile communication technologies (5G) such as 5GNR. The transceiver 14 may, for example, coordinate radio communications from one or more radio systems at different frequencies, such as cellular frequencies (around 900 MHz), Wi-Fi frequencies (around 2.4 or 5 GHz), or millimetre wave frequencies (such as 57-64 GHz).

In the specification, references to a "transmit" radio device R2 and a "receive radio device" R1 does not exclude that these particular radio devices are unable to engage in duplex or half duplex communication. The reference to "transmit" and "receive" radio devices is conveniently illustrative of the signal flow of the algorithm discussed this application, however a skilled reader will appreciate that a transceiver of a radio device operates as a full duplex or half duplex transceiver.

In some embodiments, at least one of the radio devices R1-R4 is a base station such as a NodeB, an eNB, an access point (AP), a New Radio base station (NR BS), a 5G NodeB (NB), or a Next Generation NodeB (gNB). In some embodiments, at least one of the radio devices R1-R4 is user equipment UE. In some examples, the user equipment UE is incorporated in one, or more, of a non-autonomous, autonomous or semi-autonomous vehicles such as an automobile, bus, aircraft, bicycle, drone, boat, tram, train, and the like.

According to an example, the processor 10 is either a single processor, or a chipset comprising a plurality of integrated circuits for performing the tasks of the radio device R1. The processor 10 may comprise one, or any combination, of an application processor, a digital signal processor (DSP), coprocessors, a central processing unit (CPU), as some examples. According to an example, the memory 12 may comprise a non-transitory computer readable medium that electronically stores data such as EEPROM, RAM, or other electronically readable storage media.

Therefore, the radio device R1 (and other radio devices R2-R4 discussed herein) may utilize orthogonal frequency-division multiplexing (OFDM) with a cyclic prefix (CP) on the uplink (UL) and downlink (DL), In one example, the radio device R1 uses half-duplex operation using time division duplex (TDD). The radio device R2 illustrated in Fig. 3 may be of a similar, or identical design to that of radio device R1, and thus further description of the second radio device R2 is not repeated here.

According to an example, the encoded message X and a plurality of reference signals P are transmitted in the radio resource control (RRC) message, a medium access control-control element (MAC-CE), a downlink control information (DCI), or sidelink control information (SCI). In some examples, the encoded message X and the plurality of reference signals P are transmitted on one of a physical sidelink shared channel (PSSCH), physical downlink control channel (PDCCH), a physical downlink shared channel (PDSCH), or a physical sidelink control channel (PSCCH).

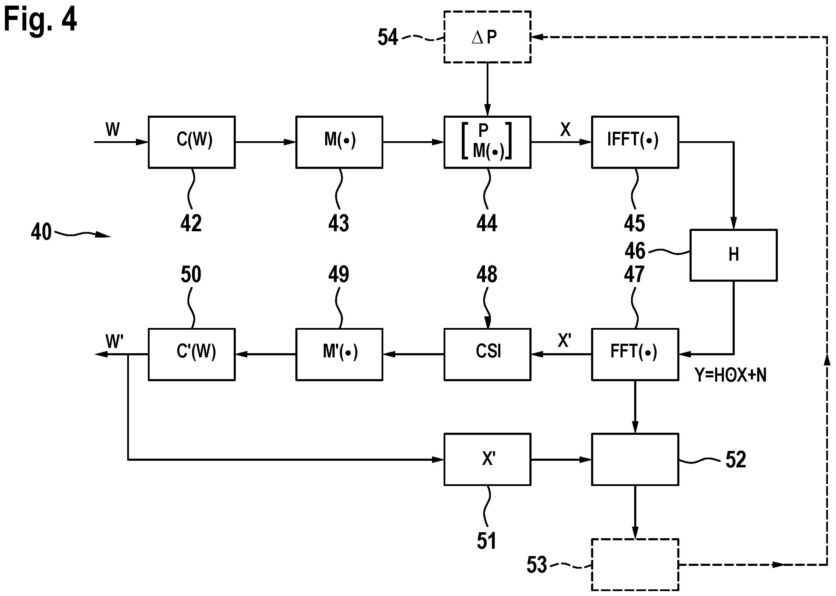

Fig. 4 schematically illustrates an example of a combined communication and sensing signal chain. A skilled person will appreciate that physical components such as the RF signal filtering, up conversion and down conversion, and amplification are omitted by convention. This

In previous approaches of multistatic sensing, the receiver (in this case, radio device R1) requires knowledge of the data transmitted by the transmitter (in this case, radio device R2). If $X$ represents the symbols transmitted from R2 and $Y = H \odot X + N$ denotes the symbols received at R1, where Q is the elementwise multiplication of matrices. Multistatic sensing, broadly stated, is estimating the sensing channel H. In the prior approaches, radio device R1 has required the originally transmitted symbols from R2 $X$ when attempting to estimate H at R1. In the present scheme, radar sensing at radio device R1 is possible without the prior knowledge of the originally transmitted symbols from radio device R2 X.

In brief, the receiving radio device R1 receives Y and uses the reference signals (sometimes referred to as pilot symbols) for estimating the channel state information (CSI). After estimating the CSI, the receiving radio device R1 decodes the sent message to obtain W'. After decoding the sent message to obtain W', the receiving radio device R1 is able to reconstruct X. In other words, the receiving radio device R1 can reconstruct the baseband signal based on the original message W as it would have appeared at the transmitting radio device R1 prior to the inverse Fourier transform (IFFFT) being applied, without knowledge of the original message W. Then, the receiving radio device R1 uses the reconstruction of $X$ (X') to improve the estimate of the channel H.

Accordingly, it is proposed to use two types of CSI (channel state information) for providing the combined communication and sensing scheme. The first CSI is used for decoding (equalising) the baseband Y' signal received at the receiving radio device R1. The second CSI is applied when computing the estimate of the channel H. The second CSI applied when computing the estimate of the channel H improves accuracy of the channel sensing.

The operation of the channel sensing process is now provided for a generic OFDM system. A skilled person will appreciate that a transmitting radio device R2 can generate an OFDM resource block according to many different formats as specified in an applicable standard.

Turning to Fig. 4, a baseband message W is obtained from a higher layer of a protocol stack of a transmitting radio device (in this example, R2). A baseband channel encoder 42 converts the baseband message **W** into a channel encoded message defined by the applicable communication standard. For example, the baseband channel encoder 42 may use a dictionary of size 2*N*R (where N is the number of bits in the baseband message, and R is the code rate) to encode the baseband message **W** into a code word SN. The rate, R, of this channel coding is chosen such that reliable communication between the transmitting radio device R2 and the receiving radio device R1 is possible. Reliable communication is the ability to decode the original baseband message **W** at the receiving radio device R1 with an arbitrarily small bit error rate.

The baseband mapper 43 obtains the channel coded version of the baseband message **W.** The channel coded version of the baseband message is mapped using a mapping function **M(.)**. For example, the output of the baseband mapper 43 is a vector of the channel coded version of the baseband message comprising a plurality of elements, wherein each element is an IQ vector, or complex number, representing the magnitude and phase of a corresponding symbol. The baseband mapper 43 may map the channel coded version of the baseband message **W** to an OOK, BPSK, QPSK, QAM 16, QAM 64, or one of many other constellations according to the relevant standard.

The reference signal generator 44 obtains the symbol vector from the baseband mapper 43, and adds reference signals P (sometimes referred to as pilot symbols) to the symbol vector. The reference signals are applied in a sequence defined by a reference signal scheme defined in an applicable standard. A skilled reader will appreciate that the absolute values of the reference signals, and their location and density in the time frequency grid of a corresponding resource block is usually varied and designed to suit channel conditions. The baseband signal X, comprising its reference signals R1, may thus be used by a receiving radio device, R1, for channel estimation and correction of the received baseband signal X' present at the receiving radio device R1.

The baseband IFFT generator 45 is configured to apply an IFFT (Inverse Fast Fourier Transform) to the baseband signal X, to thus transform the baseband signal **X** from a frequency domain complex vector into a time domain signal. The baseband IFFT generator 45 furthermore generates a cyclic prefix. The cyclic prefix may, for example, be a copy of a number of time domain samples of the IFFT(X) signal, wherein the number of time domain samples is chosen to minimise the effect of delay spread on an OFDM modulation scheme and the size of the cyclic prefix is typically specified in a relevant standard document.

Following generation of the time domain signal using the baseband IFFT generator 45, up conversion, filtering, and amplification operations are performed on the baseband time domain signal and the resulting radio frequency signal is transmitted via an antenna over the channel H 46. The channel H 46 is a function of the physical environment 102 and applies reflection, attenuation, and refraction effects to the radio frequency signal in a process referred to as multipath fading. The presence of mobile scatterers in the physical environment 102 additionally applies Doppler to the radio frequency signal. These are referred to as channel effects. A receiving radio device R2 comprises a radio frequency front end configured to amplify, down convert, and filter the radio frequency signal received via the channel H 46.

A baseband FFT generator 47 is configured to remove the cyclic prefix and to perform an FFT (Fast Fourier Transform) to thus yield a frequency domain representation of the received baseband signal X'. In other words, based on the OFDM waveform, the receiving radio device R1 receives in the frequency domain $Y = H \odot X + N$.

Based on the OFDM waveform, the message (data) and included reference signals (pilot symbols) may be represented as a matrix $X \in C^{N \times K}$, where $N$, $K$ represent number of sub-channels and number of OFDM symbols, respectively.

$$X = \begin{pmatrix} x_{1,1} & \cdots & x_{1,K} \\ \vdots & \ddots & \vdots \\ x_{N,1} & \cdots & x_{N,K} \end{pmatrix}$$

After transmission through the channel **H,** the reference signals (pilot symbols) contain channel effects which need to be estimated by the receiving radio device R2 and then removed from the baseband signal received at the receiving radio device R2. For example, the reference signals comprise a representation of the true channel behaviour between the transmitting radio device R2 and the receiving radio device R1, under the assumption that the channel does not behave abruptly between the transmission of reference signals in a given resource block.

The estimated channel obtained from the channel estimate enables the 2D interpolation in frequency and time of other subcarriers in a resource block received at the receiving radio device R1. Therefore, the channel behaviour for all subcarriers and resource blocks can be obtained.

A channel estimator and correction process 48 is configured to perform correction, or equalisation, using the reference signals obtained at the receiving radio device R1. An equalisation or interpolation process using the received reference signals enables the baseband frequency symbols received at the receiving radio device R1 to have the effects of most or all channel degradation compensated or equalised. Therefore, by applying and interpolating the reference signals to the received baseband signal X', the receiving radio device R1 estimates the channel state information, CSI, in corresponding subcarriers of the corresponding OFDM block in the frequency domain. For example, a respective OFDM subcarrier can be divided by an interpolation from a reference signal (pilot symbol).

Following equalisation (correction using channel state information) the received baseband signal **X'** is demapped using demapper 49. The equalisation is enough for the communication data to be decoded by channel decoder 50 (estimating codewords SN). The receiving radio device R1 may, therefore, reconstruct W' the original message **W** transmitted by the transmitting radio device R2 reliably. Until this point, encoding, modulation, transmission, reception, demodulation, and decoding of communications data in a OFDM system has been described. However, the baseband signal transmitted via the channel **H** and received at the receiving radio device R1 can also be used for bistatic or. Multistatic radar sensing. Beneficially, this means that the same channel resource as reserved for communication can also be used for sensing of the physical environment 102, and no or fewer special measures need to be taken to enable the coexistence of communication and channel sensing.

The sensing is performed at the receive radio device R1 by feeding the estimated message **W'** to a baseband reconstructor 51 of the receive radio device 51. The purpose of the baseband reconstructor 51 is to model the frequency domain baseband signal at the transmitting radio device R2 (prior to the IFFT being performed at the transmitting radio device R2). Therefore the purpose of the baseband reconstructor 51 is to regenerate the frequency domain vector **X**.

In order for the frequency domain baseband signal at the transmitting radio device to be reliably modelled, the estimated message **W'** needs to be combined with the same reference signals that were transmitted in the resource block at the time the resource block containing the original message **W** was transmitted. In some embodiments, the reference signals concatenated with the encoded original message in the reference signal generator 44 of the transmitting radio device R2 are defined by a reference signal scheme present in a telecommunication standard. For example, document 3GPP TS 36.211 V17.3.0 (2023-03) defines reference signal sequences for the 5G standard.

In an embodiment, the baseband reconstructor 51 comprised in the receiving radio device R1 comprises a reference signal sequence tracker configured to follow, or to mimic, the state of the reference signal generation process of the transmitting radio device R2. This ensures that during the sensing process the correct reference signals are concatenated with the estimated message **W'** of the baseband reconstructor 51.

In another embodiment, the reference signal scheme may be designed, modified, negotiated cooperatively, or changed during operation to suit channel conditions. In this case, the baseband reconstructor 51 is configured to monitor control channels of the protocol such as the PUCCH or PDCCH channels, for example, to track the reference signal scheme that has been designed, modified, negotiated cooperatively, or changed during operation between one or more of the radio devices present in a network. As the reference signal scheme changes during operation, the baseband reconstructor 51 maintains a stateful record of the reference signal scheme so that the estimated message **W'** used for channel sensing at each time step is concatenated with the correct reference signal.

According to an embodiment, the processor 10 is configured, when generating the reconstruction of the transmitted signal, to apply the same baseband processing and reference signal insertion to the estimated message as the baseband processing applied by the second radio device R2.

The channel decoder 50, demapper 49 and the channel estimator and correction process 48 are assumed to provide a quality guarantee such that the estimated message **W'** is identical, or substantially identical, to the original message W . This provides the optimal accuracy of the sensing. In other words, for optimum sensing accuracy it is assumed that **W' = W.** Optimal accuracy here has a broad meaning relative to the eventual use of the sensing information. For example, it could mean the accuracy of the speed, location, dimensions of an object shape envelope detected by multistatic or bistatic techniques. To the extent that the estimated message **W'** is not identical to the original message **W**, the accuracy of the sensing will decline from optimality.

The reference signals are inserted into the reconstructed signal from the estimated message W' of the baseband reconstructor 51. A skilled person will recognise that dependent on the use context, a suboptimal sensing result may still be accurate enough for some applications. As will be discussed subsequently, some examples if the estimated message W' is so inaccurate that reliable decoding can be performed, the receive radio device R1 is configured to feedback a NACK to the transmit radio device R2, so that a retransmission can be scheduled, so that modulation and coding from the transmit radio device R2 can be tuned to improve the bit error rate, for example.

Therefore given the estimated message **W'**, the baseband reconstructor 51 reinserts the correct reference signals (pilot symbols) for the time instant or interval at which the resource block containing the corresponding original message was transmitted.

The baseband reconstructor 51 provides the reconstructed baseband signal **X'** to the channel sensing process 52. The channel sensing process 52 obtains the received signal vector from the baseband FFT generator 47. In an embodiment, either the channel sensing process 52 and/or the baseband FFT generator 47 may save a plurality of preceding samples of **Y** corresponding to the time and/or frequency index of **X'**.

According to an embodiment, the processor 10 is configured to compute a channel quality measure between the first radio device R1 and the second communication device R2 when obtaining the estimate of the transmitted signal using the channel state information and the receive signal. For example, the channel quality measure is based bit error rate of the channel decoding, or from feedback received from another radio device in the network via a side-channel.

The channel sensing process 52 performs an element-wise combination of *Y* and *X'*. According to an embodiment, the element-wise combination of *Y* and *X'* is an element -wise division of the corresponding elements of *Y* and *X'*.

The channel sensing process 52 therefore obtains a second channel estimate which is considerably more accurate than the first channel estimate computed by channel estimator and correction process 48. The reason for the improvement in accuracy is that the second channel estimate is performed over all elements of the receive and transmit vectors *Y* and *X*. In contrast, the first channel estimate performed by the channel estimator and correction process 48 is an interpolation of the originally transmitted reference signals (pilot symbols). The accuracy of this interpolation declines as the density of transmitted reference signals is reduced. The first channel estimate performed by the channel estimator and correction process 48 is tolerable for message decoding, the leads to a suboptimality when precise channel knowledge is required for bistatic or multistatic sensing.

According to an embodiment, the processor 10 is configured to process the sensing channel data H to obtain a bistatic or multistatic radar characteristic of a physical environment 102 comprising both the first radio device R1 and the second radio device R2. A skilled person will appreciate that further radio devices such as R3, R4 can also contribute channel measurements to enhance the accuracy of an overall multistatic radar characteristic of the physical environment 102.

According to an embodiment, the processor 10 is configured to process the sensing channel data H to obtain a characteristic of at least one scatterer 104 comprised in the physical environment 102. For example, the characteristic of the scatterer may comprise the location of an object in physical environment 102 registered to an absolute coordinate system within which the radio devices R1-R4 are also registered. The characteristic of the scatterer may comprise characterisation of the physical dimensions and/or a classification of the shape of the scatterer. The sensing channel data H may be compared to a library of scattering characteristics to thus classify one, or a plurality of the physical environment 102 to one, or a plurality of items in the library of scattering characteristics. In this way, the sensing channel data H may identify a vehicle, a cyclist, a bus or tram, and static elements in the physical environment such as buildings, vegetation, or signposts.

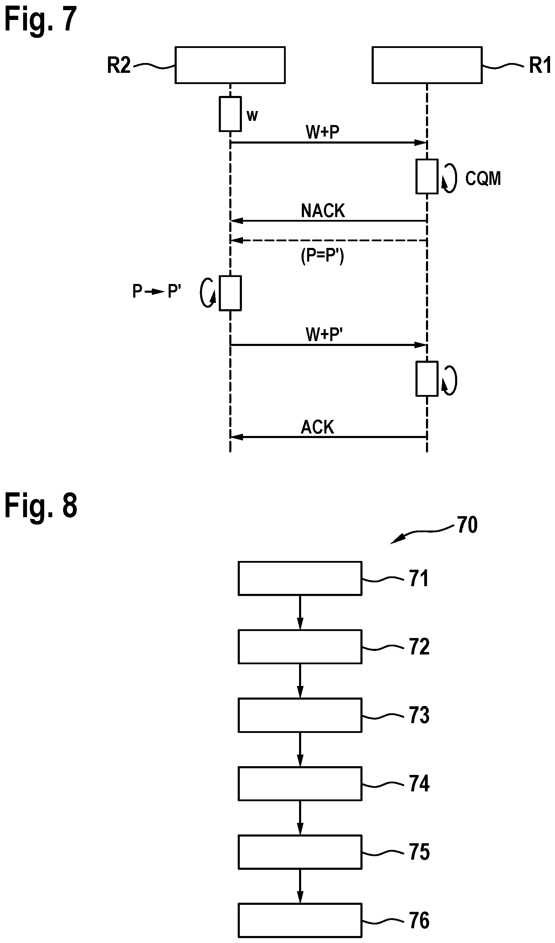

Fig. 7 schematically illustrates signalling between first and second radio devices to determine a failed sensing attempt.

According to an embodiment, the processor is configured, if the channel quality measure is lower than a predefined threshold, to cause the transceiver 14 to transmit to the second radio device R2 a negative acknowledgement NACK indicating that use of the baseband receive signal Y for radar sensing is not possible and/or to request a retransmission of the encoded message X and the plurality of reference signals P, or a different plurality of reference signals.

The foregoing embodiment is intended to address the case where the first radio device R1 (the sensing radio device) is not able to decode the sent message from the second radio device R2 reliably (the second radio device is implicitly communicating with another radio device R3, R4 in the physical environment). For example, second radio device R2 generates a message W and transmit it to the first radio device R1 with a predetermined set of reference signals P. A Channel Quality Measure characterising the channel between radio devices R1 and R2 is computed at R1. If the channel quality measure indicates that the quality of the reconstructed message W' and/or reference signals P is not sufficient for channel sensing to be successful (accurate to within a predefined specification), the first radio device R1 transmit a negative acknowledgement NACK to the second radio device R2.

According to an embodiment, when the second radio device R2 receives the negative acknowledgement NACK, the second radio device R2 retransmits the original message to the first radio device R1.

According to an embodiment, when the second radio device R2 receives the negative acknowledgement NACK, the second radio device R2 retransmits the original message to the first radio device R1 with an additional number of parity bits, or a code with different code rate, thus enabling the reconstructed message W' to have a higher likelihood of being correct received.

According to an embodiment, when the second radio device R2 receives the negative acknowledgement NACK, the second radio device R2 changes the reference signal pattern and retransmits the changed reference signal pattern P' with the original message W.

According to an embodiment, the first radio device R1 is configured to transmit an acknowledgement ACK to the second radio device R2, to thus inform the second radio device that the W+P or W+P' transmission is sufficient for accurate estimation of the channel matrix H to an accuracy useful for sensing purposes.

In current cellular communication approaches, the design of the modulation and coding scheme is optimised for communication purposes in view of the radio channel between a base station and an item of user equipment, for example. In the case of the environment of Fig. 1, the radio device R2 may intend to communicate with the radio device R3, whilst the radio devices R1 and R4 are performing multistatic sensing using the communication signals from radio device R2. Accordingly, the modulation and coding schemes should be designed so that radio devices R1 and R4 can also decode the message intended for radio device R2, because according to the technique of the present specification, the improved (second) channel estimate for providing improved multistatic sensing at each respective radio device R2-R4 requires the original message, for sensing respective channel matrix with improved accuracy. Accordingly, even if radio device R3 is the dedicated receiver for receiving the message generated by R2, the radio devices R1 and R4 should be configured to decode the message from R2 as well.

According to an embodiment, the processor 10 is configured to transmit the channel quality measure and/or a channel occupancy metric to a network control entity N, and

to receive, from the network control entity N, an updated format definition of the encoded message X and the plurality of reference signals P.

For example, to improve the quality of the channel sensing, the reference signal pattern can be designed to be optimised for specific physical environment 102, or even be parameterised to take account of the time of day, traffic conditions, and the like. The foregoing embodiment is addressed to a scenario in which location sensing is offered as a service by network operators. Here, the transmitted signal, and in particular the reference signal design, should undergo channel sensing specific design criteria. For instance, symbol duration, the operating carrier frequency and spectrum, can be adjusted based on the physical environment 102 that needs to be sensed. A network control entity N is configured to monitor network density and coverage, assess the service demand, and control the budget for optimising signal parameters and patterns used for location sensing.

According to an embodiment, the processor 10 is configured, when computing the estimate of the transmitted signal, to receive, from a third radio device R3, a decoded version of the encoded message X and/or the plurality of reference signals P. The processor 10 is configured to generate the reconstruction of the transmit signal using the decoded version of the encoded message X and/or the plurality of reference signals P. In other words, a third radio device R3 can relay its decoded version of an encoded message and/or the reference signals received at radio device R3 to the first radio device R1 to improve the quality of a multistatic estimate. In particular, radio devices located at the edge of a location service coverage area can benefit from an improvement in accuracy by using relayed data in the channel reconstruction based on a decode and forward principle.

According to an embodiment, the processor 10 is configured to detect a change in the physical environment 102 comprising at least the first radio device R1 and second radio device R2 using the sensing channel data H. The processor 10 is further configured to estimate a change in the channel state information using the detected change in the physical environment. Furthermore, the processor 10 is further configured to transmit, to the second radio device R2 feedback information comprising the estimated change in the channel state information due to the change detected in the physical environment.

According to an embodiment, the feedback information further comprises one, or more, of: a proposed change to the reference signal scheme, an index of subcarriers for OFDM symbol indices or OFDM frame indices.

Referring back briefly to Fig. 4, the first radio device R1 may comprise a channel quality monitor 53 configured to track the channel quality using the received reference symbols P'. The channel quality monitor 53 may communicate the channel quality to a reference signal generator 54 in the second (transmitting) radio device R2. For example, the channel quality monitor 53 may communicate the channel quality via a side-channel, or a reserved area of resource for channel quality feedback. The reference signal generator 54 is configured to update the reference signal based on the communicated channel quality.

Accordingly, sensing abilities of the radio devices R1-R4 can be used to adjust the reference signal scheme based on the sensed channel data H.

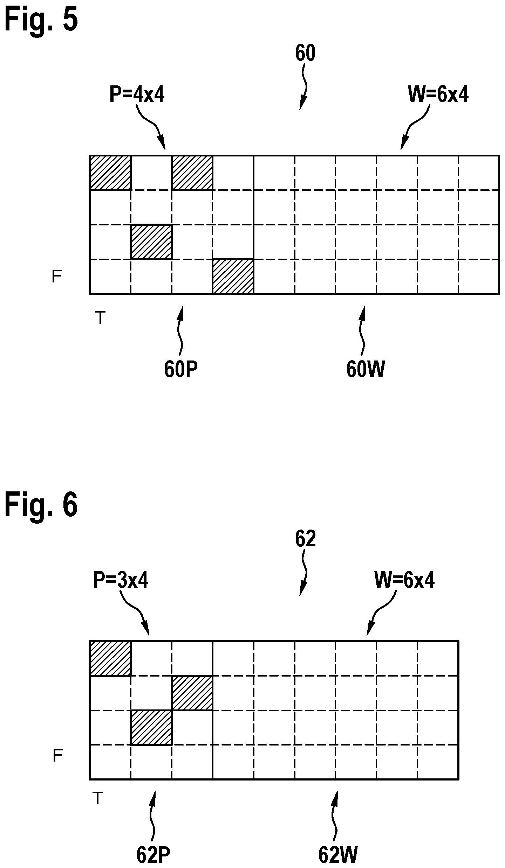

Fig. 5 schematically illustrates an OFDM resource block having a first reference signal pattern.

Fig. 6 schematically illustrates an OFDM resource block having a second reference signal pattern.

According to a third aspect, there is provided a fourth radio device R4 configured for wireless communication and bistatic or multi-static radar sensing, comprising a transceiver, a memory, and a processor coupled to the transceiver and the memory.

The transceiver and the processor are configured to receive, from a first radio device R1 via the transceiver, a negative acknowledgement indicating that use of an encoded message X received by the first radio device for radar sensing at a first radio device is not possible, compute an updated reference signal scheme, and transmit a further signal to the first radio device comprising a further encoded message X' and a further plurality of reference signals P'. The further plurality of reference signals P' are defined according to the updated reference signal scheme.

Referring back to Fig. 7, in one embodiment a fourth radio device R4 configured to transmit a communication signal receives from a first radio device R1 configured to perform bistatic or multistatic radar sensing may receive a negative acknowledgement NACK, implying that a communication signal transmitted by the fourth radio device R4 could not be used for channel sensing purposes at the first radio device R1. A strategy for addressing this is to alter the reference signal pattern at the fourth radio device R4.

First reference signal pattern 60 represents a time-frequency grid comprising message symbols 60W and reference signals (pilot symbols) 60P. Second reference signal pattern 62 represents a time-frequency grid comprising message symbols 62W and reference signals (pilot symbols) 62P. The first reference signal pattern 60P comprises 16 symbols, or resource blocks, whereas the second reference signal pattern 62P comprises 12 symbols, or resource blocks. A reference signal pattern with a large number of symbols or resource blocks may, for example, perform better in adverse channel conditions at the expense of reducing the efficiency of message communication. A reference signal pattern with a smaller number of symbols or resource blocks may, for example, perform better in good conditions with the benefit of improved efficiency of message communication.

Therefore, when a radio device, such as fourth radio device R4, receives a negative acknowledgement from another radio device R1-R3 in the system 100, the fourth radio device R4 is, in an embodiment, configured to adjust to the reference signal pattern so that the reference signal pattern occupies a greater proportion of the resource block relative to the message W. According to an embodiment, the fourth radio device R4 is configured to make the reference signal pattern denser. According to an embodiment, the fourth radio device R4 is configured to adjust the structure of the reference signal pattern in response to a sensed channel condition.

Fig. 1 schematically illustrates a system of radio devices R1-R4 comprised in a physical environment 102.

According to a fourth aspect, there is provided a radio system 100 comprising a first radio device R1 configured for wireless communication and bistatic or multi-static radar sensing according to the first aspect, or its embodiments, and a second radio device R2 configured to transmit a signal to the first radio device, wherein the signal comprises an encoded message X and a plurality of reference signals P.

According to an embodiment, the system further comprises a fourth radio device R4 according to the third aspect, or its embodiments.

Fig. 8 schematically illustrates a method according to the second aspect.

According to a second aspect, there is provided a computer implemented method 70 for wireless communication and bistatic or multi-static radar sensing comprising:

obtaining 71, from a second radio device, a baseband receive signal Y comprising an encoded message X and a plurality of reference signals P after transmission through a wireless channel;
computing 72 an estimate of a transmitted signal originally transmitted by the second radio device using the channel state information and the receive signal;
obtaining 73 an estimated signal using the channel state information and the receive signal;
performing 74 at least demodulation and channel decoding on the estimate of the transmitted signal to thus obtain an estimate of the message W' transmitted by the second radio device;

generating 75 a reconstruction of the transmit signal by performing baseband signal processing, and reference signal insertion, on the estimate of the message W', wherein the baseband signal processing and reference signal insertion corresponds to the baseband signal processing and reference signal insertion performed by the second radio device; and
generating 76 sensing channel data H by combining the reconstruction of the transmit signal and the receive signal.

According to a fifth aspect, there is provided a computer program product comprising machine readable instructions which, when executed by a processor, cause the processor to perform the method according to the second aspect.

According to a sixth aspect, there is provided a computer readable medium comprising instructions which, when executed by a processor, cause the processor 16 to carry out the method of the second aspect.

The examples provided in the drawings and described in the foregoing written description are intended for providing an understanding of the principles of this specification. No limitation to the scope of the appended claims is intended thereby. The present specification describes alterations and modifications to the illustrated examples. Only the preferred examples have been presented, and all changes, modifications, and further applications to these within the scope of the specification are desired to be protected.

## Claims

1. A first radio device (R1) configured for wireless communication and bistatic or multi-static radar sensing, comprising:

   - a transceiver (14);
   - a memory (12); and
   - a processor (10) coupled to the transceiver (14) and the memory (12), wherein the transceiver and the processor are configured to:

     obtain, from a second radio device (R2) via the transceiver (14), a baseband receive signal (Y) comprising an encoded message (X) and a plurality of reference signals (P) after transmission through a wireless channel (102);
     compute channel state information using the plurality of reference signals comprised in the baseband receive signal;
     compute an estimate of a transmitted signal originally transmitted by the second radio device (R2) using the channel state information and the baseband receive signal;
     perform at least demodulation and channel decoding on the estimate of the transmitted signal, to thus obtain an estimate of the message (W') transmitted by the second radio device (R2);
generate a reconstruction of the transmitted signal by performing baseband signal processing and reference signal insertion on the estimated message (W'), wherein the baseband signal processing and reference signal insertion corresponds to the baseband signal processing and reference signal insertion performed by the second radio device (R2); and
generate sensing channel data (H) by combining the reconstruction of the transmitted signal and the receive signal.

2. The first radio device (R1) according to claim 1, wherein the processor (10) is configured to:
process the sensing channel data (H) to obtain a bistatic or multistatic radar characteristic of a physical environment comprising both the first radio device (R1) and the second radio device (R2).

3. The first radio device (R1) according to claim 2, wherein the processor (10) is configured to:
process the sensing channel data (H) to obtain a characteristic of at least one scatterer (104) comprised in the physical environment (102).

4. The first radio device (R1) according to one of the preceding claims,
wherein the processor (10) is configured, when generating the reconstruction of the transmitted signal, to apply the same baseband processing and reference signal insertion to the estimated message as the baseband processing applied by the second radio device (R2).

5. The first radio device (R1) according to one of the preceding claims,
wherein the processor (10) is configured to, when obtaining the estimate of the transmitted signal using the channel state information and the receive signal:
compute a channel quality measure between the first radio device (R1) and the second radio device (R2).

6. The first radio device (R1) according to claim 5, wherein the processor is configured, if the channel quality measure is lower than a predefined threshold, to cause the transceiver (14) to transmit to the second radio device (R2) a negative acknowledgement (NACK) indicating that use of the baseband receive signal (Y) for radar sensing is not possible and/or to request a retransmission of the encoded message (X) and the plurality of reference signals (P), or a different plurality of reference signals.

7. The first radio device (R1) according to claim 5 or 6, wherein the processor (10) is configured:

to transmit the channel quality measure and/or a channel occupancy metric to a network control entity (N); and
to receive, from the network control entity (N), an updated format definition of the encoded message (X) and the plurality of reference signals (P).

8. The first radio device (R1) according to one of the preceding claims,
wherein the processor (10) is configured to, when computing the estimate of the transmitted signal:

receive, from a third radio device (R3), a decoded version of the encoded message (X) and/or the plurality of reference signals (P); and
generate the reconstruction of the transmit signal using the decoded version of the encoded message (X) and/or the plurality of reference signals (P).

9. The first radio device (R1) according to one of the preceding claims,
wherein the processor (10) is configured to:
detect a change in the physical environment (102) comprising at least the first radio device (R1) and second radio device (R2) using the sensing channel data (H);

estimate a change in the channel state information using the detected change in the physical environment; and
transmit, to the second radio device (R2), feedback information comprising the estimated change in the channel state information due to the change detected in the physical environment.

10. The first radio device (R1) according to claim 9, wherein the feedback information further comprises one, or more, of:
a proposed change to the reference signal scheme, an index of subcarriers for OFDM symbol indices or OFDM frame indices.

11. A fourth radio device (R4) configured for wireless communication and bistatic or multi-static radar sensing, comprising:

- a transceiver;
- a memory; and
- a processor coupled to the transceiver and the memory, wherein the transceiver and the processor are configured to:

receive, from a first radio device (R1) via the transceiver, a negative acknowledgement indicating that use of an encoded message (X) received by the first radio device for radar sensing at the first radio device is not possible;

compute an updated reference signal scheme; and

transmit a further signal to the first radio device comprising a further encoded message (X') and a further plurality of reference signals (P'), wherein the further plurality of reference signals (P') are defined according to the updated reference signal scheme.

12. A radio system (100) comprising:

- a first radio device (R1) configured for wireless communication and bistatic or multi-static radar sensing according to one of claims 1 to 10; and
- a second radio device (R2) configured to transmit a signal to the first radio device, wherein the signal comprises an encoded message (X) and a plurality of reference signals (P).

13. The radio system (100) according to claim 12; further comprising:

- the fourth radio device (R4) according to claim 11.

14. A computer implemented method (70) for wireless communication and bistatic or multi-static radar sensing comprising:

obtaining (71), from a second radio device, a baseband receive signal (Y) comprising an encoded message (X) and a plurality of reference signals (P) after transmission through a wireless channel;

computing (72) an estimate of a transmitted signal originally transmitted by the second radio device using the channel state information and the receive signal;

obtaining (73) an estimated signal using the channel state information and the receive signal;

performing (74) at least demodulation and channel decoding on the estimate of the transmitted signal to thus obtain an estimate of the message (W') transmitted by the second radio device;

generating (75) a reconstruction of the transmit signal by performing baseband signal processing, and reference signal insertion, on the estimate of the message (W'), wherein the baseband signal processing and reference signal insertion corresponds to the baseband signal processing and reference signal insertion performed by the second radio device; and generating (76) sensing channel data (H) by combining the reconstruction of the transmit signal and the receive signal.

15. A computer program product comprising machine readable instructions which, when executed by a processor, cause the processor to perform the method according to claim 14.

# Fig. 1

## Fig. 2

R1

10

12

14

## Fig. 3

R2

20

24

22

**Fig. 4**

EP 4 498 123 A1

EP 4 498 123 A1

## Fig. 5

## Fig. 6

16

## Fig. 7

R2 ⌇ [      ]                    [      ] ⌇ R1

W

⟶ W+P ⟶

CQM

⟵ NACK ⟵

⟵ (P=P') ⟵

P → P'

⟶ W+P' ⟶

⟵ ACK ⟵

## Fig. 8

70

[    ] ⌇ 71

↓

[    ] ⌇ 72

↓

[    ] ⌇ 73

↓

[    ] ⌇ 74

↓

[    ] ⌇ 75

↓

[    ] ⌇ 76

Europäisches
Patentamt

European
Patent Office

Office européen
des brevets

# EUROPEAN SEARCH REPORT

Application Number

EP 23 18 8394

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/107768 A1 (QUALCOMM INC [US]) 15 June 2023 (2023-06-15) * abstract; figures 4d, 4e * * paragraphs [0058], [0097] - [0099], [0103] - [0106] * | 1-15 | INV. G01S13/00 G01S13/58 G01S13/76 G01S13/87 |
| A | WO 2021/030685 A1 (IDAC HOLDINGS INC [US]) 18 February 2021 (2021-02-18) * abstract; figure 3 * * paragraphs [0091], [0103] * | 1-15 | |
| A | WO 2022/236248 A1 (GOOGLE LLC [US]) 10 November 2022 (2022-11-10) * abstract; figures 1-3 * * paragraphs [0013] - [0016] * | 1-15 | |

TECHNICAL FIELDS
SEARCHED    (IPC)

G01S

The present search report has been drawn up for all claims

| Place of search | Date of completion of the search | Examiner |
|---|---|---|
| Munich | 15 December 2023 | Cordeiro, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 18 8394

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2023

| Patent document cited in search report | Publication date | Patent family member(s) | | Publication date |
|---|---|---|---|---|
| WO 2023107768 A1 | 15-06-2023 | NONE | | |
| WO 2021030685 A1 | 18-02-2021 | BR | 112022002763 A2 | 10-05-2022 |
| | | CN | 114375547 A | 19-04-2022 |
| | | EP | 4014349 A1 | 22-06-2022 |
| | | KR | 20220044794 A | 11-04-2022 |
| | | US | 2022225121 A1 | 14-07-2022 |
| | | WO | 2021030685 A1 | 18-02-2021 |
| WO 2022236248 A1 | 10-11-2022 | CN | 117242368 A | 15-12-2023 |
| | | WO | 2022236248 A1 | 10-11-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 36.211 V17.3.0*, March 2023